# EUROPÄISCHE PATENTSCHRIFT

(11) **EP 1 935 775 B1**
(45) Veröffentlichungstag und Bekanntmachung des Hinweises auf die Patenterteilung: **18.11.2009**
(21) Anmeldenummer: 07023814.2
(22) Anmeldetag: 08.12.2007
(51) Int. Cl.: B62M 9/12

(54) **Kettenwerferbaugruppe für eine Fahrradschaltung**
Chain guide for a bicycle derailleur
Guide de chaîne pour dérailleur de bicyclette

(30) Priorität: 20.12.2006 DE 102006060221
(43) Veröffentlichungstag der Anmeldung: 25.06.2008
(73) Patentinhaber: SRAM Deutschland GmbH, 97404 Schweinfurt (DE)
(72) Erfinder: Chen, Ted, Wurih Township Taichung County (TW); Benz, Andreas, 97453 Mainberg (DE); Blaschke, Georg, 97505 Geldersheim (DE); Böhm, Robert, 97453 Mainberg (DE)

(56) Entgegenhaltungen:
- DE-A1- 2 503 532
- DE-A1- 10 158 827
- FR-A- 2 637 249
- US-A- 4 580 327
- US-A1- 2005 250 608

## Beschreibung

Die vorliegende Erfindung betrifft eine Kettenwerferbaugruppe aus leichten Materialien für eine Fahrradschaltung, insbesondere die formschlüssige Verbindung eines hochfesten Bauteils z. B. aus Stahl und einem Bauteil aus leichtem Material z. B. aus Aluminium oder Faserverbundwerkstoff mittels eines thermoplastischen Werkstoffes zu einem kompletten Mehrkomponenten-Bauteil.

Die Kettenwerferbaugruppe für den vorderen Kettenumwerfer und das hintere Schaltwerk umfasst jeweils eine, die Kette umgreifende Kettenführung, die von mindestens einem weiteren tragenden Bauteil relativ zum Fahrradrahmen verschiebbar gehalten wird. Diese Kettenführung besteht aus mindestens zwei Bauteilen, einem inneren, dem Fahrradrahmen zugewandten, und einem äußeren Seitenteil, die zum Einlegen der Kette geöffnet werden können. Mit dem äußeren Seitenteil ist ein tragendes Bauteil bzw. die Anlenkung für ein tragendes Bauteil fest verbunden und bildet mit dem äußeren Seitenteil ein gemeinsames Bauteil.

Speziell die Kettenwerferbaugruppe für das Schaltwerk, insbesondere die Kettenführung beinhaltet ein inneres und äußeres Seitenteil, die gemeinsam die Achsen für die freilaufenden Spann- und Führungsrollen abstützen. Am äußeren Seitenteil ist das tragende Bauteil in Form einer Schwenkachse fest angeordnet. Die Schwenkachse trägt und stützt die Kettenwerferbaugruppe am Schaltwerk ab und kann zudem der Führungsrolle als Achse dienen. Auf Grund der hoch belasteten Tragfunktion und der Lagerfunktion für die Führungsrolle empfiehlt sich hierfür der Einsatz eines metallischen Werkstoffes z. B. Stahl, während für die Seitenteile, zumindest für das äußere Seitenteil, leichter Werkstoff wie z. B. Aluminium oder Faserverbundwerkstoff mit einem Glas- oder Karbonfaseranteil eingesetzt werden kann.

Die Verwendung unterschiedlicher Materialien, mit dem Ziel der Gewichtsreduzierung, birgt Probleme hinsichtlich der Kraftübertragung an den Verbindungsstellen und des Fertigungsaufwandes, da die Herstellung von Faserverbundteilen und ihre hochbelastbare Verbindung mit metallischen Bauteilen sehr aufwändig ist.

In der DE 101 58 827 A1 ist eine Kettenwerferbaugruppe für das hintere Schaltwerk mit einem äußeren Seitenteil aus Fasergewebe, das in eine Matrix eines thermoplastischen Materials inkorporiert ist, und einer Gelenkachse aus Metall offenbart. Hierbei wird die hohle Gelenkachse durch Kaltumformen wie Bördeln oder Verstemmen am äußeren Seitenteil befestigt. Das Fasergewebe des äußeren Seitenteils wird somit zwischen zwei Metallflächen eingeklemmt bzw. eine kraftschlüssige Verbindung hergestellt. Dies ist hinsichtlich der Materialverträglichkeit und der geforderten Positionsgenauigkeit und stabilen Ausrichtung der Gelenkachse keine zuverlässige Verbindung. Zudem ist das äußere Seitenteil ausgebaucht, was durch teueres Kompressionsformen erzielt wird und den benötigten Bauraum vergrößert.

Ausgehend vom Stand der Technik liegt der Erfindung die Aufgabe zugrunde, eine leichte, für die Serienfertigung geeignete Kettenwerferbaugruppe aus unterschiedlichen Werkstoffen wie hochfestem Metall und leichtem Material wie Aluminium oder Faserverbundwerkstoff zu schaffen, insbesondere eine Kettenführung mit einer festen, formschlüssigen Verbindung zwischen einem Seitenteil aus Aluminium oder Faserverbundwerkstoff und einem tragenden Bauteil aus Stahl oder einem anderen hochfesten Material. Dabei ist zum einen eine positionsgenaue, formschlüssige Fixierung des tragenden Bauteils am Seitenteil zu gewährleisten und zum anderen soll durch den Einsatz von Aluminium oder standardisierten Faserverbundplatten, z. B. aus duroplastischem Karbonfaserwerkstoff, eine kostengünstige Fertigung der Kettenwerferbaugruppe realisiert werden. Ein mit erheblichen Nachteilen verbundenes Zusammenfügen der Schwenkachse mit dem äußeren Seitenteil durch Einlaminieren, Einpressen oder Einschrauben ist nicht werkstoffgerecht und somit zu umgehen.

Die Lösung der Aufgabe wird gemäß den kennzeichnenden Merkmalen des Hauptanspruches realisiert. Ausgestaltungen sind den Unteransprüchen zu entnehmen.

Die Kettenwerferbaugruppe, insbesondere die Kettenführung besteht aus zwei Seitenteilen und einem tragenden Bauteil. Mindestens ein Seitenteil, aus Aluminium oder aus Faserverbundwerkstoff z. B. aus duroplastichem Karbonfaser- oder Glasfaserwerkstoff, wird mit einem aus Metall z. B. aus Stahl bestehenden tragenden Bauteil, mittels eines thermoplastischen Materials zu einem drei Komponenten Verbundwerkstück bzw. einem Bauteil zusammengefasst. Hierzu werden das Seitenteil und das tragende Bauteil in ein Spritzgusswerkzeug positioniert eingelegt und mit einem thermoplastischen Werkstoff umspritzt. Das aus plattenförmigem Aluminium oder Faserverbundmaterial vorgefertigte Seitenteil einer Kettenführung verfügt im Bereich der Position eines tragenden Bauteiles bzw. der Anlenkung für ein tragendes Bauteil z. B. eine Schwenkachse über mehrere Durchbrüche oder Ausnehmungen. In mindestens einem Durchbruch des Seitenteils wird das tragende Bauteil aufgenommen und ausgerichtet und mit einem thermoplastischen Werkstoff umgeben. Dieser Werkstoff taucht zudem auch in mindestens einem anderen Durchbruch und/oder Ausnehmung am Seitenteil ein, wodurch ein hohes Haltemoment und eine feste, formschlüssige Verbindung mit dem Seitenteil erzielt werden. Auch das tragende Bauteil ist im Bereich der Verbindungsstelle zum Seitenteil mit einer Verformung z. B. einer unrunden Kontur oder einer Verzahnung bzw. Rändelung ausgestattet, damit es mit dem umgebenden thermoplastischen Werkstoff eine feste, formschlüssige Verbindung bilden kann. Durch die Formgebung am plattenförmigen Seitenteil und am tragenden Bauteil im Bereich der Verbindungsstelle wird an beiden Teilen eine formschlüssige Verbindung mit dem thermoplastischen Material erzielt. Das thermoplastische Material bildet somit quasi ein Verbindungsteil zwischen dem Seitenteil und dem tragenden Bauteil. Diese Lösung gewährleistet neben einer genauen Ausrichtung des Seitenteils zum tragenden Bauteil auch eine stabile formschlüssige Verbindung dieser Bauteile zu einem einstückigen Bauteil. Das Seitenteil und das tragende Bauteil werden nahezu ohne direkte Berührung über das verbindende thermoplastische Material zusammengefügt, zudem werden, wie sonst bei Verbundwerkstoffen zur Versteifung üblich, keine metallischen Einsätze benötigt. Eine Beschädigung des Faserverbundteiles verursacht durch eine kraftschlüssige Verbindung, z. B. durch das Einpressen eines Metallteiles wird somit vermieden. Das eine formschlüssige Verbindung erzeugende und sowohl das tragende Bauteil als auch das Seitenteil partiell umschließende Verbindungsteil ist unempfindlich gegen Temperaturen und Erschütterungen und widersteht auch den Drehmomenten die über anliegende Bauteile eingeleitet werden.

Es hat sich als vorteilhaft erwiesen, wenn dieses thermoplastische Verbindungsteil neben seiner Befestigungsfunktion auch noch die Schutzfunktion für die benachbarten Lagerstellen übernimmt. Das Verbindungsteil ist auf beiden Seiten mit einem hervorstehenden Dichtungsrand ausgestattet, der jeweils einen Dichtdeckel bildet und auf der einen Seite die Lagerung der Führungsrolle und auf der anderen Seite die Kettenführungsaufnahme bzw. die Aufnahme des beweglichen tragenden Bauteils abdeckt.

### Kurzbeschreibung der Zeichnungen

Die vorliegende Erfindung wird mit Bezug auf die beigefügten Zeichnungen detailliert beschrieben, wobei die Zeichnungen lediglich als nicht beschränkende Beispiele der erfinderischen Kettenwerferbaugruppe anzusehen sind.
- Fig. 1: zeigt eine Explosionsdarstellung der hinteren Kettenwerferbaugruppe
- Fig. 2: zeigt in zwei 3D-Darstellungen wie das äußere Seitenteil über das Verbindungsteil mit dem tragenden Bauteil verbunden ist
- Fig. 3: zeigt eine 3 D-Darstellung des einstückigen Bauteils mit auf beiden Seiten angeordneten Dichtdeckeln
- Fig. 4: zeigt in einer Schnittdarstellung von Fig. 3 die Drei-Komponentenverbindung

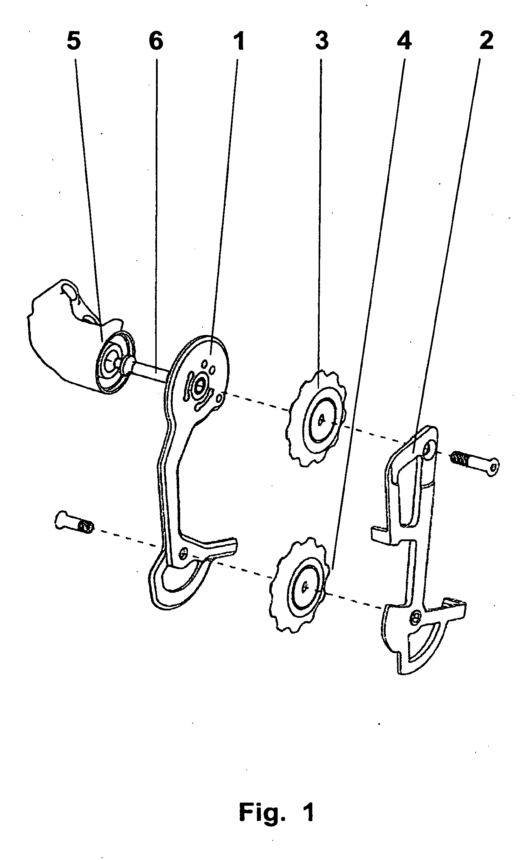

Figur 1 zeigt die hintere Kettenwerferbaugruppe mit dem äußeren Seitenteil 1, dem inneren Seitenteil 2, der Führungsrolle 3, der Spannrolle 4 sowie mit der Kettenführungsaufnahme 5. Die Seitenteile 1 und 2 werden mit zwei Schrauben zur Kettenführung zusammengeschraubt. Die Schrauben bilden gleichzeitig die Achsen für die Führungsrolle 3 sowie für die Spannrolle 4. Die Kettenführung wird vom tragenden Bauteil 6, in Form einer Schwenkachse, an der Kettenführungsaufnahme 5 abgestützt, dabei ermöglicht die Schwenkachse eine definierte Schwenkbewegung der Kettenführung.

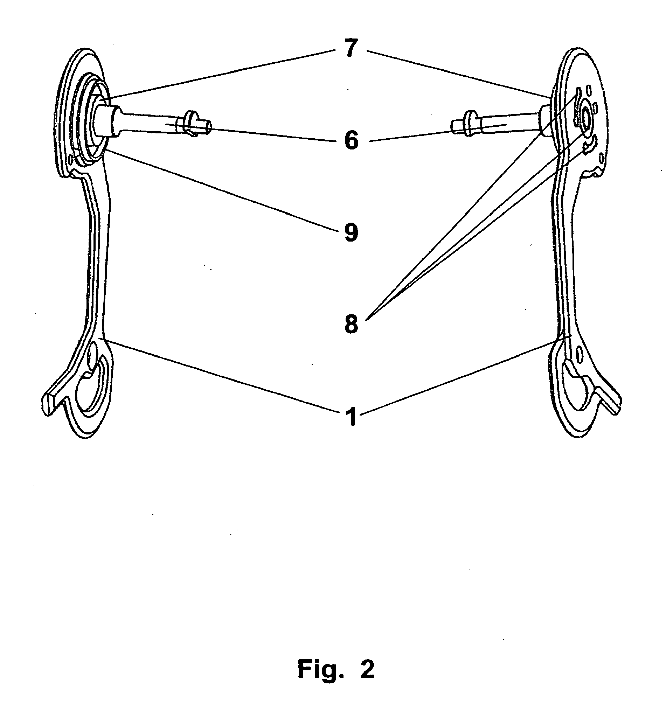

Figur 2 zeigt, wie das äußere Seitenteil 1 über das Verbindungsteil 7 mit dem tragenden Bauteil 6 verbunden ist. Am äußeren Seitenteil 1 sind Durchbrüche 8 vorgesehen, die eine feste, formschlüssige Verbindung des Verbindungsteils 7 mit dem äußeren Seitenteil 1 gewährleisten. Beim Herstellen des Drei-Komponententeiles wird das aus einem plattenförmigen Aluminium oder duroplastischen Karbonfasermaterial bestehende äußere Seitenteil 1 in ein Spritzgusswerkzeug eingelegt und das aus einem hochfesten Werkstoff z. B. aus Stahl oder einem Faserverbundwerkstoff bestehende tragende Bauteil 6 im zentralen Durchbruch 8 des äußeren Seitenteils 1 positioniert und dazu ausgerichtet. Anschließend wird ein thermoplastischer Werkstoff eingespritzt, der das Verbindungsteil 7 bildet. Dabei umgibt der thermoplastische Werkstoff die gerändelte Kontur des tragenden Bauteils 6 und füllt die Durchbrüche 8 am äußeren Seitenteil 1 aus, wodurch an beiden Bauteilen eine formschlüssige Verbindung erzielt wird. Zur Verlängerung der axialen Traglänge am tragenden Bauteil 6 steht das Verbindungsteil 7 über die nach außen gerichtete Oberfläche des äußeren, plattenförmigen Seitenteils 1 hinaus. Zudem ist das Verbindungsteil 7 auf dieser Seite noch mit einem ringförmigen Dichtungsrand 9 ausgestattet und fungiert somit als Dichtdeckel zur Abdichtung der Öffnung an der Kettenführungsaufnahme.

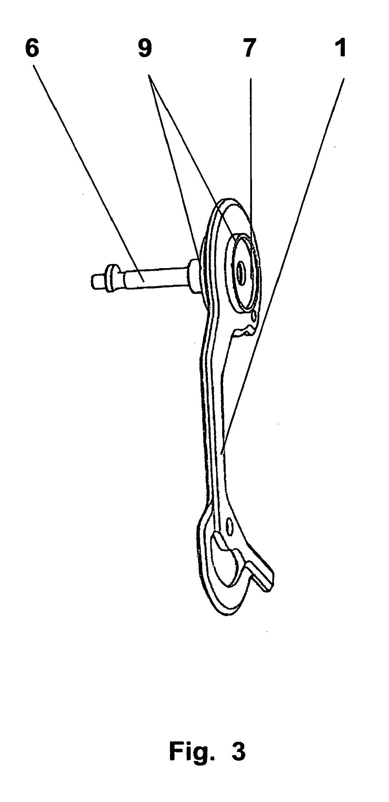

Figur 3 zeigt das einstückige Bauteil mit auf beiden Seiten angeordneten Dichtdeckeln, die von den Dichtungsrändern 9 gebildet werden. Das äußere Seitenteil 1 ist über das Verbindungsteil 7 mit dem tragenden Bauteil 6 fest verbunden. Das Verbindungsteil 7 umschließt zum einen das unrunde oder mit einer Rändelung ausgestattete Endstück des tragenden Bauteils 6 und zum anderen greift es in die Durchbrüche ein und umschließt beidseitig das äußere Seitenteil 1 im Bereich des tragenden Bauteils 6. Dabei steht das Verbindungsteil 7 beidseitig über das plattenförmige äußere Seitenteil 1 hinaus und vergrößert somit die axiale Überdeckung am tragenden Bauteil 6. Dieser beidseitig angeordnete, versteifende Überstand des Verbindungsteils 7 bildet die Dichtungsränder 9, die zur Abdichtung der Kettenführungsaufnahme und der Spannrollenlagerung benötigt werden.

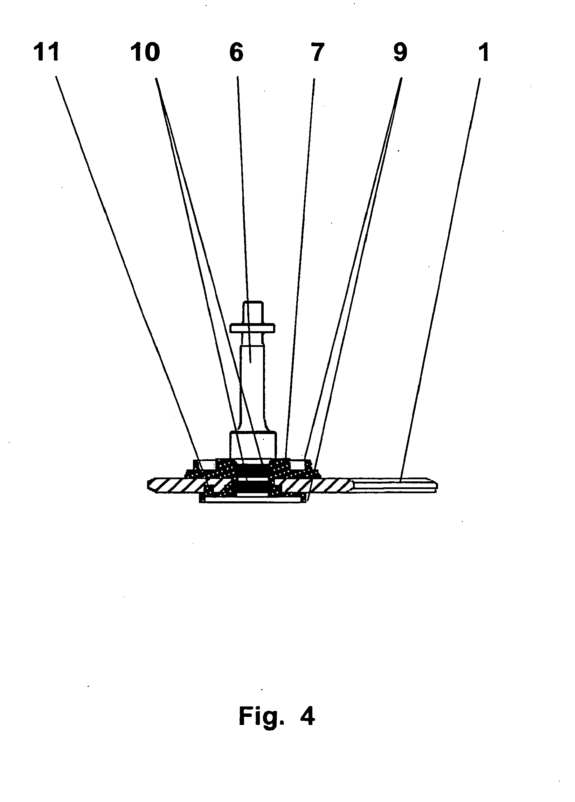

Figur 4 zeigt eine Schnittdarstellung der Figur 3 mit dem plattenförmigen äußeren Seitenteil 1 aus Aluminium oder Karbonfaserwerkstoff, dem tragenden Bauteil 6 aus Metall oder Faserverbundwerkstoff und dem Verbindungsteil 7 aus thermoplastischem Kunststoff. Das Verbindungsteil 7 wird im Spritzgussverfahren, nach positionierter Einlage und Ausrichtung der beiden anderen Bauteile zueinander in einem Spritzgusswerkzeug hergestellt. Das Verbindungsteil 7 umgibt das mit zwei Rändelungen 10 ausgestattete Ende des tragenden Bauteils 6, dabei ragt das Verbindungsteil 7 im Bereich des tragenden Bauteils 6 wesentlich über das schmale, plattenförmige äußere Seitenteil 1 hinaus. Dieser Überstand verlängert somit die tragende Verbindungslänge zwischen dem tragenden Bauteil 6 und dem Verbindungsteil 7. Der Abstand zwischen dem tragenden Bauteil 6 und dem äußeren Seitenteil 1 ist entsprechend groß, damit das Seitenteil 1 nicht am tragenden Bauteil 6 anliegt und sich eine ausreichende Materialstärke am thermoplastischen Verbindungsteil 7 zwischen den beiden angrenzenden Bauteilen bilden kann. Die Stärke des plattenförmigen äußeren Seitenteils 1 ist sehr gering, so dass sich nur eine geringe radiale Kontaktfläche zwischen dem Verbindungsteil 7 und dem Seitenteil 1 ergibt. Dieses Befestigungsproblem wird durch Ausnehmungen 11 und Durchbrüche gelöst, die mit einem Abstand zum großen Durchbruch, der das tragende Bauteil 6 aufnimmt, am äußeren Seitenteil 1 angeordnet sind. Die Ausnehmungen 11 und Durchbrüche im äußeren Seitenteil 1 ermöglichen das seitliche Eingreifen des Verbindungsteils 7 und ergeben eine formschlüssige Verbindung zwischen dem Seitenteil 1 und dem Verbindungsteil 7. Auf beiden Seiten des äußeren Seitenteils 1 sind am Verbindungsteil 7 noch Dichtungsränder 9 angeordnet, wodurch das Verbindungsteil 7 als seitlicher Dichtdeckel fungieren kann. Der Dichtdeckel auf der Seite des tragenden Bauteils 6 schützt die Kettenführungsaufnahme vor Verschmutzung, während der Dichtdeckel auf der anderen Seite die Führungsrollenlagerung seitlich abdichtet.

Mit dieser Drei-Komponenten-Verbindung insbesondere dem Verbindungsteil 7 wird eine kostengünstige, stabile und formschlüssige Verbindung zwischen dem äußeren Seitenteil 1 und dem tragenden Bauteil 6 erzielt.

### Bezugszeichenliste

- 1: Äußeres Seitenteil
- 2: Inneres Seitenteil
- 3: Führungsrolle
- 4: Spannrolle
- 5: Kettenführungsaufnahme
- 6: Tragendes Bauteil
- 7: Verbindungsteil
- 8: Durchbruch
- 9: Dichtungsrand
- 10: Rändelung
- 11: Ausnehmung

## Patentansprüche

1. Kettenwerferbaugruppe für eine Fahrradschaltung, bestehend aus einer, die Kette umgreifenden Kettenführung mit einem inneren (2) und äußeren Seitenteil (1) sowie mindestens einem tragenden Bauteil (6), wobei die Kettenführung vom tragenden Bauteil (6) relativ zum Fahrradrahmen verschiebbar gehalten wird,
**dadurch gekennzeichnet,**
**dass** mindestens ein Seitenteil (1, 2) und mindestens ein tragendes Bauteil (6) mit einem thermoplastischen Verbindungsteil (7) formschlüssig zu einem einstückigen Bauteil verbunden sind.

2. Kettenwerferbaugruppe nach Anspruch 1,
**dadurch gekennzeichnet,**
**dass** das äußere Seitenteil (1) aus einem plattenförmigen, leichten Material wie z. B. aus Aluminium oder Faserverbundwerkstoff besteht und im Bereich der Verbindungsstelle für das tragende Bauteil (6), bzw. der Anlenkung für ein tragendes Bauteil (6), mit Durchbrüchen (8) oder Ausnehmungen (11) ausgestattet ist, in die das Verbindungsteil (7) zum Herstellen einer formschlüssigen Verbindung eingreift.

3. Kettenwerferbaugruppe nach Anspruch 1,
**dadurch gekennzeichnet,**
**dass** das tragende Bauteil (6) aus hochfestem Werkstoff z. B. aus Stahl besteht und im Bereich der Verbindungsstelle für das äußere Seitenteil (1) mit einer Verformung z. B. einer unrunden Kontur, einer Verzahnung oder Rändelung (10) ausgestattet ist, und mit dem Verbindungsteil (7) eine feste, formschlüssige Verbindung bildet.

4. Kettenwerferbaugruppe nach Anspruch 2,
**dadurch gekennzeichnet,**
**dass** das äußere Seitenteil (1) mit einem Durchbruch (8) für das tragende Bauteil (6) ausgestattet ist, wobei dieser Durchbruch (8) wesentlich größer ist als die aufzunehmende Kontur des tragenden Bauteiles (6) und noch genügend Zwischenraum für das Verbindungsteil (7) vorhanden ist.

5. Kettenwerferbaugruppe nach Anspruch 4,
**dadurch gekennzeichnet,**
**dass** das thermoplastische Verbindungsteil (7) sowohl das äußere Seitenteil (1) als auch das dazu ausgerichtete tragende Bauteil (6) partiell umschließt und vorzugsweise im Spritzgussverfahren hergestellt wird.

6. Kettenwerferbaugruppe nach Anspruch 5,
**dadurch gekennzeichnet,**
**dass** das Verbindungsteil (7) als seitlicher Dichtdeckel ausgebildet ist und einen Dichtungsrand (9) aufweist, der auf der zur Kettenführungsaufnahme (5) bzw. zur Aufnahme des tragenden Bauteils (6) gerichteten Seite am äußeren Seitenteil (1) hervorsteht.

7. Kettenwerferbaugruppe nach Anspruch 5,
**dadurch gekennzeichnet,**
**dass** das Verbindungsteil (7) auf beiden Seiten des äußeren Seitenteils (1) hervorsteht und mit Dichtungsrändern (9) ausgestattet ist, die seitliche Dichtdeckel bilden, wobei der auf der äußeren Seite des Seitenteils (1) angeordnete Dichtungsrand (9) die Aufnahme des tragenden Bauteils (6) an der Kettenführungsaufnahme (5) abdichtet, während der andere Dichtungsrand (9) die Lagerung der Führungsrolle (3) abdichtet.

## Claims

1. Dérailleur subassembly for a bicycle dérailleur, comprising a chain guide which fits around the chain and has an inner side part (2) and an outer side part (1) and at least one supporting component (6), wherein the chain guide is held displaceably relative to the bicycle frame by the supporting component (6),
**characterized in that** at least one side part (1, 2) and at least one supporting component (6) are connected by a thermoplastic connecting part (7) in an interlocking manner to form a single-piece component.

2. Dérailleur subassembly according to Claim 1,
**characterized in that** the outer side part (1) is composed of a plate-like, lightweight material, such as, for example, aluminium or a fibre composite, and, in the region of the connecting point for the supporting component (6) or of the articulation for a supporting component (6), is provided with apertures (8) or recesses (11) in which the connecting part (7) engages in order to produce an interlocking connection.

3. Dérailleur subassembly according to Claim 1,
**characterized in that** the supporting component (6) is composed of a high-strength material, for example of steel, and, in the region of the connecting point for the outer side part (1), is provided with a deformation, for example a non-round contour, a toothing or a knurling (10) and forms a fixed, interlocking connection with the connecting part (7).

4. Dérailleur subassembly according to Claim 2,
**characterized in that** the outer side part (1) is provided with an aperture (8) for the supporting component (6), said aperture (8) being substantially larger than the contour to be received of the supporting component (6) and there still being sufficient intermediate space for the connecting part (7).

5. Dérailleur subassembly according to Claim 4,
**characterized in that** the thermoplastic connecting part (7) partially surrounds both the outer side part (1) and the supporting component (6), which is aligned with respect thereto, and is preferably produced by injection moulding.

6. Dérailleur subassembly according to Claim 5,
**characterized in that** the connecting part (7) is designed as a lateral sealing cover and has a sealing edge (9) which protrudes on the outer side part (1) on the side directed towards the chain guide receptacle (5) and towards the receptacle for the supporting component (6).

7. Dérailleur subassembly according to Claim 5,
**characterized in that** the connecting part (7) protrudes on both sides of the outer side part (1) and is provided with sealing edges (9) which form lateral sealing covers, the sealing edge (9) arranged on the outer side of the side part (1) sealing the receptacle for the supporting component (6) on the chain guide receptacle (5) while the other sealing edge (9) seals the mounting of the guide roller (3).

## Revendications

1. Module de guide de chaîne pour un dérailleur de bicyclette, se composant d'un guide de chaîne entourant la chaîne avec une pièce latérale intérieure (2) et une pièce latérale extérieure (1) ainsi qu'au moins un composant porteur (6), dans lequel le guide de chaîne est tenu par le composant porteur (6) de façon mobile par rapport au cadre de bicyclette, **caractérisé en ce qu'**au moins une pièce latérale (1, 2) et au moins un composant porteur (6) sont assemblés en un composant unitaire par complémentarité de forme au moyen d'un élément de liaison thermoplastique (7).

2. Module de guide de chaîne selon la revendication 1, **caractérisé en ce que** la pièce latérale extérieure (1) se compose d'un matériau léger en forme de plaque, comme par exemple en aluminium ou un matériau composite fibreux, et est dotée, dans la région du point de liaison pour le composant porteur (6) ou de l'articulation pour un composant porteur (6), de passages (8) ou de découpes (11), dans lesquels/lesquelles l'élément de liaison (7) est engagé pour réaliser une liaison par complémentarité de forme.

3. Module de guide de chaîne selon la revendication 1, **caractérisé en ce que** le composant porteur (6) est constitué d'un matériau à haute résistance, par exemple d'acier, et est doté d'une déformation, par exemple d'un contour non circulaire, d'une denture ou d'un moletage (10) dans la région du point de liaison pour la pièce latérale extérieure (1), et forme un assemblage solidaire par complémentarité de forme avec l'élément de liaison (7).

4. Module de guide de chaîne selon la revendication 2, **caractérisé en ce que** la pièce latérale extérieure (1) est dotée d'un passage (8) pour le composant porteur (6), dans lequel ce passage (8) est sensiblement plus grand que le contour du composant porteur (6) à recevoir et offre encore un espace intermédiaire suffisant pour l'élément de liaison (7).

5. Module de guide de chaîne selon la revendication 4, **caractérisé en ce que** l'élément de liaison thermoplastique (7) entoure partiellement aussi bien la pièce latérale extérieure (1) que le composant porteur (6) orienté vers celle-ci et est de préférence fabriqué par un procédé de coulée par injection.

6. Module de guide de chaîne selon la revendication 5, **caractérisé en ce que** l'élément de liaison (7) se présente sous la forme d'un couvercle étanche latéral et présente un bord d'étanchéité (9), qui est saillant sur la pièce latérale extérieure (1) sur le côté dirigé vers le logement du guide de chaîne (5) ou vers le logement du composant porteur (6).

7. Module de guide de chaîne selon la revendication 5, **caractérisé en ce que** l'élément de liaison (7) est saillant sur les deux côtés de la pièce latérale extérieure (1) et est muni de bords d'étanchéité (9), qui forment des couvercles étanches latéraux, dans lequel le bord d'étanchéité (9) disposé sur le côté extérieur de la pièce latérale (1) obture de façon étanche le logement du composant porteur (6) sur le logement de guide de chaîne (5) tandis que l'autre bord d'étanchéité (9) obture de façon étanche le palier du galet de guidage (3).
